# FASCICULE DE BREVET EUROPEEN

(11) **EP 3 895 147 B1**
(45) Date de publication et mention de la délivrance du brevet: **04.01.2023**
(21) Numéro de dépôt: 19829293.0
(22) Date de dépôt: 21.11.2019
(51) Int. Cl.: G08G 1/16, G01S 13/86, G01S 17/87, G01S 17/93, G01S 13/93

(54) **PROCÉDÉ DE DÉTERMINATION D'UNE VALEUR COURANTE D'UN PARAMÈTRE D'OCCUPATION RELATIF À UNE PORTION D'UN ESPACE SITUÉ À PROXIMITÉ D'UN VÉHICULE TERRESTRE À MOTEUR**
VERFAHREN ZUR BESTIMMUNG EINES AKTUELLEN WERTS EINES BELEGUNGSPARAMETERS, DER SICH AUF EINEN TEIL EINES RAUMES BEZIEHT, DER SICH IN DER NÄHE EINES MOTORBETRIEBENEN LANDFAHRZEUGS BEFINDET
METHOD FOR DETERMINING A CURRENT VALUE OF AN OCCUPANCY PARAMETER RELATING TO A PORTION OF A SPACE LOCATED IN THE VICINITY OF A MOTOR-DRIVEN LAND VEHICLE

(30) Priorité: 11.12.2018 FR 1872678
(43) Date de publication de la demande: 20.10.2021
(73) Titulaire: PSA Automobiles SA, 78300 Poissy (FR)
(72) Inventeur: VANPOPERINGHE, Elodie, 92100 BOULOGNE BILLANCOURT (FR); DUESO, Damien, 91640 FONTENAY LES BRIIS (FR); RIZZO, Audrey, 92150 SURESNES (FR); GALERON, Patrice, 94240 L HAY LES ROSES (FR); HENDI, Paul, 92370 CHAVILLE (FR)
(86) Numéro de dépôt international: PCT/FR2019/052772
(87) Numéro de publication internationale: WO 2020/120855

(56) Documents cités:
- EP-A1- 3 376 487
- WO-A1-2015/185846
- US-A- 5 572 484
- US-A1- 2016 116 916
- US-B1- 10 086 809

## Description

### Domaine technique de l'invention

La présente invention concerne le domaine des systèmes d'aide à la conduite pour véhicules terrestres à moteur. L'invention porte notamment sur un procédé de détermination d'au moins une valeur courante d'au moins un paramètre d'occupation relatif à une portion d'un espace situé à proximité d'un véhicule terrestre à moteur. L'invention s'applique notamment aux véhicules automobiles.

### Etat de la technique

On sait que les systèmes d'aide à la conduite actuels, notamment ceux destinés à l'assistance pour la conduite autonome, basent généralement les fonctionnalités d'aide à la conduite (e.g. freinage d'urgence, évitement latéral, suivi de la voie, etc.) sur une perception d'un environnement de conduite déterminée en utilisant les appareils de détection de natures diverses qui sont aujourd'hui agencés dans la plupart des véhicules (LIDAR, RADAR, caméra, capteurs à ultrasons, etc.). Aussi, dans la plupart des cas, la perception de l'environnement de conduite est établie par le système d'aide à la conduite sur la base de données qui sont générées par ces appareils de détection. Dans certains cas, cette perception de l'environnement de conduite se matérialise sous la forme d'une grille d'occupation établie pour couvrir un espace plus ou moins grand situé à proximité du véhicule. Dans de tels cas, l'évolution de l'occupation de l'espace par des obstacles ou des objets est alors définie en utilisant, par exemple, une variable d'état qui caractérise un état d'occupation et qui est définie pour chaque cellule de la grille, i.e. pour toutes les portions d'un espace considéré qui est situé à proximité du véhicule. Ainsi, généralement, la variable d'état peut évoluer selon l'état d'occupation d'une cellule de la grille d'occupation pour caractériser au moins un état libre, état dans lequel aucun objet/obstacle ne se trouve au sein de la cellule, un état occupé, état opposé au précédent dans lequel au moins un objet/obstacle se trouve dans la cellule, et, éventuellement, un état indéfini qui caractérise une appréciation indéfinie, i.e. inconnue, quant à l'occupation d'une cellule considérée.

On connait par le document WO2015/185846 un procédé d'analyse d'une scène dynamique, un module d'analyse et un programme d'ordinateur associés. On connait par le document US 10 086 0809 un système de freinage automatique.

On comprend donc bien que la fiabilité des systèmes d'aide à la conduite actuels qui basent la fourniture de fonctionnalités d'aide à la conduite principalement sur une perception de l'environnement de conduite établie par grille d'occupation sont tributaires de la précision avec laquelle les grilles d'occupation peuvent être déterminées. En effet, on ne peut espérer baser des fonctionnalités d'aide à la conduite fiables et sûres si l'on n'est pas en mesure de déterminer précisément l'environnement de conduite. Or, l'expérience montre que, même si certains mécanismes de sécurisation peuvent être utiles pour s'assurer que les données fournies par les appareils de détection sont correctement transmises et interprétées afin d'établir des grilles d'occupation qui matérialisent scrupuleusement ces données (e.g. codage redondant), il peut arriver que les appareils de détection soient eux-mêmes la source d'erreurs. En effet, il arrive parfois que l'un ou l'autre des appareils de détection croit détecter un obstacle qui en réalité n'existe pas. De telles détections incorrectes, sorte de fausses alarmes, peuvent gêner significativement des applications d'aide à la conduite lors de certaines situations de conduite spécifiques, notamment des situations de conduite à basse vitesse (e.g. entrée/sortie de stationnement, circulation d'approche de stationnement, manœuvre inhabituelle). En effet, à basse vitesse, lorsque ces détections incorrectes se manifestent à des distances proches du véhicule, elles peuvent alors engendrer des freinages brutaux, voire l'incapacité du véhicule à se déplacer.

### Présentation de l'invention

L'invention vise à fournir un procédé pour pallier ces inconvénients. L'invention vise donc à fournir un procédé et un système qui contribuent à améliorer la précision de la perception d'un environnement de conduite en vue de fournir une meilleure détection des obstacles et supporter ainsi la fourniture de fonctionnalités d'aide à la conduite plus sûres. Plus spécifiquement, l'invention a pour but de fournir un procédé et un système qui peuvent sécuriser un système d'aide à la conduite contre certaines erreurs de détection qui peuvent être commises par les appareils de détection, notamment des appareils de télédétection par laser (LIDAR).

A cet effet, l'invention a pour objet un procédé de détermination d'au moins une valeur courante d'au moins un paramètre d'occupation relatif à une portion d'un espace situé à proximité d'un véhicule terrestre à moteur, le procédé comprenant des étapes pour
- obtenir des données historiques d'occupation, lesdites données historiques d'occupation étant générées lorsqu'au moins un appareil de détection agencé dans le véhicule détecte la présence d'un obstacle,
- obtenir des données courantes d'occupation, lesdites données courantes d'occupation étant générées en déterminant si un signal est émis par l'appareil de détection, le procédé étant caractérisé en ce qu'il comprend une étape pour obtenir une valeur de vitesse instantanée de déplacement du véhicule, et,
- lorsque ladite valeur de vitesse instantanée est inférieure à un premier seuil, déterminer la distance qui sépare le véhicule de ladite portion et, si la distance est inférieure à un deuxième seuil, déterminer la valeur courante du paramètre d'occupation en utilisant les données historiques d'occupation et les données courantes d'occupation.

Selon une variante, l'étape de détermination de la valeur courante du paramètre d'occupation peut comprendre les étapes de :
- déterminer si lesdites données courantes d'occupation caractérisent la présence d'un obstacle au sein de ladite portion, et,
- lorsque tel est le cas, déterminer si lesdites données historiques d'occupation caractérisent la présence d'un obstacle au sein de ladite portion.

Selon une autre variante, le procédé peut comprendre une étape consistant à, lorsque lesdites données courantes d'occupation caractérisent la présence d'un obstacle au sein de ladite portion alors que lesdites données historiques ne caractérisent pas la présence d'un obstacle au sein de ladite portion, établir la valeur courante de sorte qu'elle définit un état libre en regard de ladite portion d'espace.

Selon une autre variante, le premier seuil peut être égal à 15km/h.

Selon une autre variante, le deuxième seuil peut être égal à 3m.

L'invention a en outre pour objet un système informatique de détermination d'au moins une valeur courante d'au moins un paramètre d'occupation relatif à une portion d'un espace situé à proximité d'un véhicule terrestre à moteur, le système comprenant des moyens mettant en œuvre un procédé tel que défini ci-dessus.

Selon une variante, le système peut comprendre au moins un processeur et des moyens de stockage dans lesquels sont stockés au moins un programme pour l'exécution d'étapes selon le procédé de détermination mis en œuvre par le système.

L'invention a en outre pour objet un programme d'ordinateur comprenant des instructions pour l'exécution des étapes d'un procédé tel que défini ci-dessus.

L'invention a en outre pour objet un support utilisable dans une ordinateur sur lequel est enregistré un programme tel que défini ci-dessus.

L'invention a en outre pour objet un véhicule terrestre à moteur comprenant un système tel que défini ci-dessus.

### Brève description des figures

D'autres caractéristiques et avantages de l'invention apparaîtront à l'examen de la description détaillée ci-après, et des dessins annexés, sur lesquels :
[Fig. 1] est un schéma bloc d'un système de détermination selon l'invention, et
[Fig. 2] est un organigramme illustrant certaines étapes d'un procédé de détermination selon l'invention.

### Description détaillée de l'invention

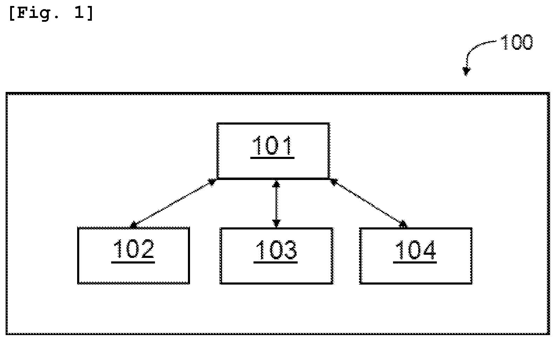

Comme illustré à la figure 1, le système de détermination 100 d'au moins une valeur courante d'au moins un paramètre d'occupation relatif à une portion d'un espace situé à proximité d'un véhicule terrestre à moteur selon la présente invention comprend une unité de traitement d'information 101, comprenant un ou plusieurs processeurs, un support de stockage de données 102, des moyens d'entrée et sortie 103 et, éventuellement, des moyens de communication par signaux radiofréquences 104.

Selon certains modes de réalisation, le système 100 est embarqué dans un véhicule terrestre à moteur, par exemple un véhicule automobile, et est distribué parmi un ou plusieurs calculateurs. Selon d'autres modes de réalisation de l'invention, le système 100 comprend un ou plusieurs ordinateurs, un ou plusieurs serveurs, un ou plusieurs supercalculateurs et/ou n'importe quelle combinaison comprenant l'un de ces systèmes informatiques. On peut également envisager certains modes de réalisation dans lesquels certains éléments du système 100 sont hébergés en partie à bord d'un véhicule terrestre à moteur, sur un ou plusieurs calculateurs, alors que d'autres éléments sont répartis sur un ou plusieurs serveurs distants.

Selon le mode de réalisation préféré, le système 100 fait partie intégrante d'un calculateur d'un système d'aide à la conduite (non représenté) du véhicule qui s'appuie sur une pluralité d'appareils de détection (non représentés) agencés dans le véhicule. De préférence, le système d'aide à la conduite comprend au moins un appareil de télédétection par laser, un appareil de radiodétection, une caméra et/ou un capteur à ultrasons, chacun comprenant de préférence un module de traitement des signaux apte à générer des données sur la base de signaux reçus. Alternativement, ou cumulativement, le système d'aide à la conduite comprend un module de traitement central apte à générer des données sur la base de signaux transmis par les appareils de détection. De manière conventionnelle, le système d'aide à la conduite comprend aussi un ou plusieurs calculateurs qui, selon des rôles établis et en fonction des données générées par les appareils de détection, contrôlent le fonctionnement de certains organes du véhicule pour fournir diverses fonctionnalités d'aide à la conduite (e.g. assistance au freinage d'urgence, évitement d'obstacle, suivi de voie). En outre, de manière avantageuse quoique très conventionnelle, le système d'aide à la conduite est en tout temps capable de déterminer au moins une valeur de vitesse instantanée de déplacement du véhicule. Enfin, alternativement, ou cumulativement, le système d'aide à la conduite comprend des éléments additionnels adaptés et configurés pour interagir au sein d'un système de transport intelligent.

Alternativement, selon un autre mode de réalisation particulier, le système 100 est hébergé par un calculateur indépendant et interagit avec un calculateur du système d'aide à la conduite du véhicule pour obtenir les données générées par les appareils de détection. Alternativement, les données sont générées par le système d'aide à la conduite et stockées par celui-ci dans le support de stockage de données 102 du système 100.

Tous les éléments décrits ci-dessus contribuent pour permettre au système 100 de mettre en œuvre un procédé de détermination d'au moins une valeur courante d'au moins un paramètre d'occupation relatif à une portion d'un espace situé à proximité d'un véhicule terrestre à moteur, tel que décrit ci-dessous.

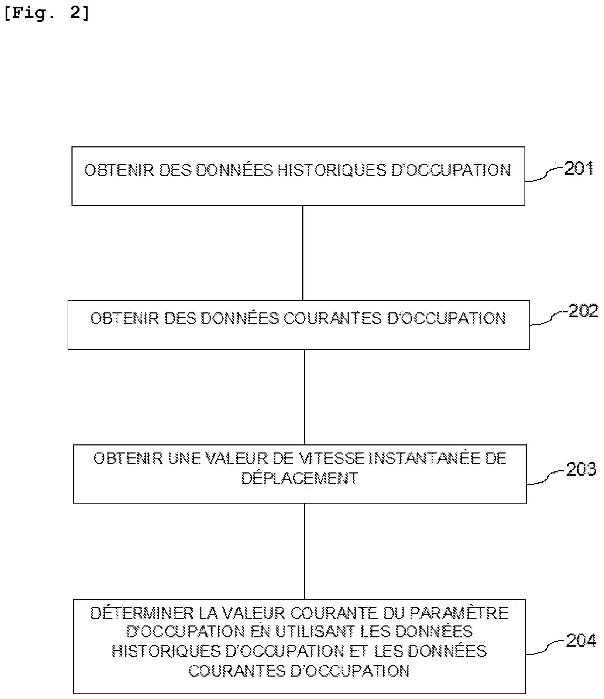

Comme illustré à la figure 2, selon une étape 201, le système 100 obtient, i.e. extrait, récupère ou reçoit, des données historiques d'occupation relatives à la portion d'espace.

En effet, des données historiques d'occupation sont générées par le système 100 et/ou le système d'aide à la conduite à chaque fois qu'un appareil de détection détecte la présence d'un obstacle. De manière avantageuse, ces données historiques d'occupation mettent en correspondance des éléments d'informations temporelles, identifiant des instants auxquels des obstacles sont détectés, avec des éléments d'informations de localisation, identifiant des portions d'espace concernées par ces détections, par exemple des cellules d'une grille d'occupation.

Ainsi, en utilisant les données historiques d'occupation, le système 100 peut déterminer des endroits où des obstacles ont été antérieurement détectés et des instants auxquels ces détections sont intervenues. En particulier, relativement à la portion d'espace, les données historiques d'occupation permettent au système 100 de déterminer si la portion d'espace a antérieurement été dans un état occupé, libre ou les deux. En outre, grâce aux données historiques d'occupation, le système 100 peut aussi, alternativement ou cumulativement, déterminer une durée pendant laquelle la portion d'espace reste dans un même état d'occupation.

Selon une autre étape 202, le système 100 obtient des données courantes d'occupation qui, elles, caractérisent de manière inéquivoque un état courant d'occupation de la portion d'espace. Ces données courantes d'occupation sont générées par le système 100 et/ou le système d'aide à la conduite en fonction de signaux émis par les appareils de détection du système d'aide à la conduite. Par exemple, des données courantes d'occupation qui caractérisent un état libre de la portion d'espace sont générées en déterminant qu'aucun signal n'est émis par un appareil de détection. Au contraire, des données courantes d'occupation qui caractérisent un état occupé de la portion d'espace sont générées lorsqu'un appareil de détection émet un signal lors de la détection d'un obstacle au sein de la portion d'espace. Ainsi, par l'exécution de cette étape, le système 100 obtient des données qui lui permettent de déterminer un état courant d'occupation de la portion d'espace, i.e. de savoir si l'état courant de la portion d'espace est libre ou occupé.

Selon une autre étape 203, le système 100 obtient une valeur de vitesse instantanée de déplacement du véhicule du véhicule. Comme évoqué ci-dessus, le système d'aide à la conduite est en mesure de déterminer à tout moment la vitesse instantanée de déplacement du véhicule. Pour ce faire, le système d'aide à la conduite récupère par exemple la valeur de la vitesse instantanée de déplacement du véhicule en interagissant avec un système informatique ou un calculateur qui contrôle un compteur de vitesse du véhicule. De manière avantageuse, par l'exécution de cette étape, le système 100 devient donc à ce stade en mesure de connaître la vitesse instantanée de déplacement du véhicule.

Ensuite, selon une étape 204, lorsque la valeur de vitesse instantanée de déplacement est inférieure à un premier seuil préalablement établi, par exemple 15km/h, le système 100 détermine alors la distance qui sépare le véhicule de la portion d'espace. En effet, de manière avantageuse, le procédé mis en œuvre par le système 100 progresse à ce stade uniquement si le véhicule se déplace lentement et si la portion d'espace se trouve dans une zone proche du véhicule. Ceci permet de limiter la mise en œuvre des moyens de sécurisation fournis par le procédé selon l'invention uniquement à des situations de conduite à basse vitesse. Aussi, lorsque la portion d'espace est plus éloignée ou lorsque la vitesse instantanée de déplacement est plus élevée, le procédé se termine.

En revanche, lorsque la distance préalablement déterminée est inférieure à un deuxième seuil, par exemple 3m, le système 100 détermine alors la valeur courante du paramètre d'occupation en utilisant à la fois les données historiques d'occupation et les données courantes d'occupation.

Pour ce faire, le système 100 détermine d'abord si les données courantes d'occupation caractérisent la présence d'un obstacle au sein de la portion. Lorsque tel est le cas, le système 100 détermine ensuite si les données historiques d'occupation caractérisent aussi la présence d'un obstacle au sein de ladite portion. Enfin, lorsque les données courantes d'occupation caractérisent la présence d'un obstacle au sein de la portion alors que les données historiques ne caractérisent pas, elles, la présence d'un obstacle au sein de la portion, le système 100 établit la valeur courante de sorte qu'elle caractérise un état libre de la portion d'espace. Au contraire, lorsque les données courantes d'occupation et les données historiques d'occupation caractérisent conjointement la présence d'un obstacle au sein de la portion, le système 100 établit la valeur courante du paramètre d'occupation de sorte qu'elle caractérise un état occupé de la portion d'espace. Ainsi, une valeur courante qui caractérise un état occupé de la portion d'espace ne peut être affectée que si la portion d'espace se trouvait antérieurement dans le même état d'occupation.

Par conséquent, aux termes du procédé et du système selon l'invention décrits ci-dessus, les briques fonctionnelles sont fournies pour permettre à un système d'aide à la conduite d'établir une perception plus précise d'un environnement de conduite et, donc, de fournir ainsi des fonctionnalités d'aide à la conduite plus fiables et plus sûres. En particulier, des moyens sont mis à disposition pour, en lien avec certaines situations de conduite spécifiques, sécuriser un système d'aide à la conduite contre les erreurs de détection des appareils de détection.

L'invention ne se limite pas aux modes de réalisation décrits ci-dessus, présentés uniquement à titre d'exemples, mais s'étend à d'autres modes de réalisation, notamment ceux formés en combinant certaines caractéristiques décrites en lien avec certains modes de réalisation avec d'autres caractéristiques décrites en lien avec d'autres modes de réalisation qui sont à la portée de l'homme du métier.

## Revendications

1. Procédé de détermination par un système informatique (100) d'au moins une valeur courante d'au moins un paramètre d'occupation relatif à une portion d'un espace situé à proximité d'un véhicule terrestre à moteur, le procédé comprenant des étapes pour obtenir des données historiques d'occupation, lesdites données historiques d'occupation étant générées lorsqu'au moins un appareil de détection agencé dans le véhicule détecte la présence d'un obstacle, obtenir des données courantes d'occupation, lesdites données courantes d'occupation étant générées en déterminant si un signal est émis par l'appareil de détection, le procédé étant **caractérisé en ce qu'**il comprend une étape pour obtenir une valeur de vitesse instantanée de déplacement du véhicule, et, lorsque ladite valeur de vitesse instantanée est inférieure à un premier seuil, déterminer la distance qui sépare le véhicule de ladite portion et, si la distance est inférieure à un deuxième seuil, déterminer la valeur courante du paramètre d'occupation en utilisant les données historiques d'occupation et les données courantes d'occupation.

2. Procédé selon la revendication 1, **caractérisé en ce que** l'étape de détermination de la valeur courante du paramètre d'occupation comprend les étapes de :
déterminer si lesdites données courantes d'occupation caractérisent la présence d'un obstacle au sein de ladite portion, et, lorsque tel est le cas, déterminer si lesdites données historiques d'occupation caractérisent la présence d'un obstacle au sein de ladite portion.

3. Procédé selon la revendication 2, **caractérisé en ce que**, lorsque lesdites données courantes d'occupation caractérisent la présence d'un obstacle au sein de ladite portion alors que lesdites données historiques ne caractérisent pas la présence d'un obstacle au sein de ladite portion, établir la valeur courante de sorte qu'elle définit un état libre en regard de ladite portion d'espace.

4. Procédé selon l'une des revendications précédentes, **caractérisé en ce que** le premier seuil est égal à 15km/h.

5. Procédé selon l'une des revendications précédentes, **caractérisé en ce que** le deuxième seuil est égal à 3m.

6. Système informatique (100) de détermination d'au moins une valeur courante d'au moins un paramètre d'occupation relatif à une portion d'un espace situé à proximité d'un véhicule terrestre à moteur, **caractérisé en ce qu'**il comprend des moyens (101, 102, 103, 104) de mise en œuvre d'un procédé selon l'une quelconque des revendications précédentes.

7. Système selon la revendication 6, **caractérisé en ce qu'**il comprend au moins un processeur (101) et des moyens de stockage (102) dans lesquels sont stockés au moins un programme pour l'exécution d'étapes selon le procédé de détermination mis en œuvre par le système.

8. Programme d'ordinateur comprenant des instructions de code de programme pour l'exécution des étapes d'un procédé selon l'une quelconque des revendications 1 à 5 lorsque ledit programme est exécuté sur un ordinateur.

9. Support utilisable dans un ordinateur et sur lequel est enregistré un programme selon la revendication 8.

10. Véhicule terrestre à moteur, **caractérisé en ce qu'**il comprend un système selon l'une des revendications 6 ou 7.

## Patentansprüche

1. Verfahren zum Bestimmen mindestens eines aktuellen Werts mindestens eines Belegungsparameters, der sich auf einen Teil eines Raums in der Nähe eines motorisierten Landfahrzeugs bezieht, durch ein Computersystem (100), wobei das Verfahren Schritte zum Erhalten historischer Belegungsdaten umfasst, wobei die historischen Belegungsdaten erzeugt werden, wenn mindestens eine in dem Fahrzeug angeordnete Erfassungsvorrichtung das Vorhandensein eines Hindernisses erfasst, **dadurch gekennzeichnet, dass** das Verfahren Schritte zum Erhalten von historischen Belegungsdaten umfasst, wobei die historischen Belegungsdaten erzeugt werden, wenn mindestens eine in dem Fahrzeug angeordnete Erfassungsvorrichtung das Vorhandensein eines Hindernisses erfasst,
Erhalten von aktuellen Belegungsdaten, wobei die aktuellen Belegungsdaten durch Bestimmen, ob ein Signal von der Erfassungsvorrichtung ausgegeben wird, erzeugt werden, wobei das Verfahren **dadurch gekennzeichnet ist, dass** es einen Schritt umfasst zum
Erhalten eines momentanen Geschwindigkeitswerts für die Fahrt des Fahrzeugs, und,
wenn der momentane Geschwindigkeitswert kleiner als ein erster Schwellenwert ist, die Entfernung des Fahrzeugs von dem Abschnitt zu bestimmen, und wenn die Entfernung kleiner als ein zweiter Schwellenwert ist, den aktuellen Wert des Belegungsparameters unter Verwendung der historischen Belegungsdaten und der aktuellen Belegungsdaten zu bestimmen.

2. Verfahren nach Anspruch 1, **dadurch gekennzeichnet, dass** der Schritt des Bestimmens des aktuellen Werts des Belegungsparameters die folgenden Schritte umfasst: :
Bestimmen, ob die aktuellen Belegungsdaten das Vorhandensein eines Hindernisses innerhalb des Abschnitts kennzeichnen, und,
wenn dies der Fall ist, Bestimmen, ob die historischen Belegungsdaten das Vorhandensein eines Hindernisses innerhalb des Abschnitts charakterisieren.

3. Verfahren nach Anspruch 2, **dadurch gekennzeichnet, dass**, wenn die aktuellen Belegungsdaten das Vorhandensein eines Hindernisses innerhalb des Abschnitts kennzeichnen, während die historischen Daten nicht das Vorhandensein eines Hindernisses innerhalb des Abschnitts kennzeichnen, der aktuelle Wert so festgelegt wird, dass er einen freien Zustand in Bezug auf den Raumabschnitt definiert.

4. Verfahren nach einem der vorhergehenden Ansprüche, **dadurch gekennzeichnet, dass** der erste Schwellenwert gleich 15km/h ist.

5. Verfahren nach einem der vorhergehenden Ansprüche, **dadurch gekennzeichnet, dass** der zweite Schwellenwert gleich 3 m ist.

6. Computersystem (100) zur Bestimmung von mindestens einem aktuellen Wert von mindestens einem Belegungsparameter, der sich auf einen Teil eines Raums in der Nähe eines motorisierten Landfahrzeugs bezieht, **dadurch gekennzeichnet, dass** es Mittel (101, 102, 103, 104) zur Durchführung eines Verfahrens nach einem der vorhergehenden Ansprüche umfasst.

7. System nach Anspruch 6, **dadurch gekennzeichnet, dass** es mindestens einen Prozessor (101) und Speichermittel (102) umfasst, in denen mindestens ein Programm zur Ausführung von Schritten gemäß dem von dem System durchgeführten Bestimmungsverfahren gespeichert ist.

8. Computerprogramm, das Programmcodeanweisungen zur Ausführung der Schritte eines Verfahrens nach einem der Ansprüche 1 bis 5 umfasst, wenn das Programm auf einem Computer ausgeführt wird.

9. Medium, das in einem Computer verwendet werden kann und auf dem ein Programm nach Anspruch 8 gespeichert ist.

10. Motorisiertes Landfahrzeug, **dadurch gekennzeichnet, dass** es ein System nach einem der Ansprüche 6 oder 7 enthält.

## Claims

1. . A method of determining by a computer system (100) at least one current value of at least one occupancy parameter relating to a portion of a space located in the vicinity of a motorized land vehicle, the method comprising steps for obtaining historical occupancy data, said historical occupancy data being generated when at least one sensing device arranged in the vehicle detects the presence of an obstacle,
obtaining current occupancy data, said current occupancy data being generated by determining whether a signal is emitted by the detection apparatus, the method being **characterized in that** it comprises a step for
obtaining an instantaneous speed value of the vehicle, and,
when said instantaneous speed value is less than a first threshold, determining the distance of the vehicle from said portion and, if the distance is less than a second threshold, determining the current value of the occupancy parameter using the historical occupancy data and the current occupancy data.

2. The method of claim 1, wherein the step of determining the current value of the occupancy parameter comprises the steps of:
determining whether said current occupancy data characterizes the presence of an obstacle within said portion, and,
when so, determining whether said historical occupancy data characterizes the presence of an obstacle within said portion.

3. The method of claim 2, wherein, when said current occupancy data characterizes the presence of an obstacle within said portion while said historical data does not characterize the presence of an obstacle within said portion, setting the current value so that it defines a free state with respect to said portion of space.

4. A method according to any of the preceding claims, **characterized in that** the first threshold is equal to 15km/h.

5. A method according to one of the preceding claims, **characterized in that** the second threshold is equal to 3m.

6. Computer system (100) for determining at least one current value of at least one occupation parameter relating to a portion of a space located in the vicinity of a motorized land vehicle, **characterized in that** it comprises means (101, 102, 103, 104) for implementing a method according to any of the preceding claims.

7. System according to claim 6, **characterized in that** it comprises at least one processor (101) and storage means (102) in which are stored at least one program for the execution of steps according to the determination method implemented by the system.

8. A computer program comprising program code instructions for the execution of steps of a method according to any of claims 1 to 5 when said program is executed on a computer.

9. A medium usable in a computer and having recorded thereon a program according to claim 8.

10. Motorized land vehicle, **characterized in that** it comprises a system according to one of claims 6 or 7.
